# FASCICULE DE BREVET EUROPEEN

(11) **EP 2 664 229 B1**
(45) Date de publication et mention de la délivrance du brevet: **01.11.2017**
(21) Numéro de dépôt: 13305611.9
(22) Date de dépôt: 15.05.2013
(51) Int. Cl.: A01D 34/73

(54) **Dispositif sécurisé d'assemblage et de maintien d'une pièce entraînée avec une seconde pièce d'entraînement en rotation**
Sicheres Gerät zum Zusammenbau und zur Befestigung eines angetriebenen Teils mit einem zweiten Antriebsteil
Secure device for assembling and holding a driven part with a second drive rotation part

(30) Priorité: 16.05.2012 FR 1254495
(43) Date de publication de la demande: 20.11.2013
(73) Titulaire: PELLENC (Société Anonyme), 84120 Pertuis (FR)
(72) Inventeur: Gialis, Jean-Marc, 84460 Cheval Blanc (FR)
(74) Mandataire: Nuss, Laurent

(56) Documents cités:
- EP-A1- 1 048 197
- EP-A1- 1 228 680
- FR-A1- 2 517 927
- FR-A1- 2 575 242
- FR-A1- 2 893 221

## Description

La présente invention se rapporte au domaine des dispositifs d'assemblage sécurisés et plus particulièrement au domaine des dispositifs d'accouplement sécurisés pour pièces en mouvement.

La mise en mouvement et notamment en rotation de pièces génère des phénomènes vibratoires, par exemple en raison d'un balourd, qui peuvent être parasites et altérer la connexion, l'assemblage et la fixation de pièces montées entre elles. Ces vibrations, éventuellement couplées à différents chocs supportés par les pièces lors de leur travail dans un appareil particulier, sont alors à l'origine d'un possible desserrage, voire d'une désolidarisation de ces pièces, bien que ces pièces soient généralement adaptées pour supporter ces mouvements répétés et vibrations parasites.

Dans un appareil de coupe équipé d'une ou de plusieurs lames rotatives, par exemple une machine d'écimage de la vigne par couteaux rotatifs, celles-ci sont généralement montées sur un axe d'entraînement rotatif. Ces lames en rotation à vitesse élevée sont ainsi amenées à supporter des vibrations et/ou des chocs réguliers dus aux contacts répétés du tranchant des lames contre la surface coupée. De tels vibrations et/ou chocs, associés à l'inertie de la lame peuvent alors conduire une lame montée sur son axe à se détacher subitement de la structure qui la porte alors qu'elle est toujours en rotation à vitesse élevée. L'éjection d'une lame en mouvement de son support présente un danger conséquent, une lame non-contrôlée qui saute de son axe d'entraînement peut être amenée à blesser quelqu'un.

Une solution consisterait à réaliser un assemblage irréversible de la lame avec son support d'entraînement en rotation. Cependant, une telle solution présente l'inconvénient de ne pas permettre un détachement de la lame lorsque celle-ci serait endommagée, pour son remplacement ou son affûtage, sans devoir remplacer l'ensemble formé par la lame et son support.

Une solution alternative permettant un détachement de la lame de son support, telle qu'illustrée par la publication FR 2893221, consiste à multiplier le nombre de points de fixation réversible de la lame sur le support. L'augmentation du nombre de points de fixation réversible permet ainsi une réduction du risque de desserrage. En effet, si l'un de ces points de fixation vient à céder, les autres points restants permettent de palier cette fixation déficitaire en maintenant la lame assemblée à son support et en poursuivant son entraînement. Cependant, une telle solution est longue à mettre en oeuvre au vu du nombre important de pièces en jeu, et impose le montage/démontage de chacun des points de fixation pour permettre l'assemblage/désassemblage de ces pièces. Cette opération est d'autant plus longue et coûteuse en main d'oeuvre quand une pluralité de lames doit être assemblée et désassemblée. Cette opération présente alors un risque important de perte de pièces et/ou de négligence qui conduirait l'opérateur à ne pas pouvoir réassembler toutes les pièces empêchant la rotation des différentes lames. D'autre part, dans le cas d'une lame en cours de fonctionnement où surviendrait un desserrage avancé de l'ensemble des points de fixation réversible, la lame présenterait le danger d'être toujours en rotation au moment de sa libération de son support. La publication EP1 228 680 A1 décrit les caractéristiques techniques du préambule de la revendication 1. La présente invention a pour but de pallier à ces inconvénients en proposant un dispositif qui permette d'assurer un montage simplifié d'une lame rotative sur son support d'entraînement, tout en s'affranchissant des risques susceptibles de survenir d'un désassemblage non-souhaité de la lame de son support.

L'invention a ainsi pour objet un dispositif sécurisé d'assemblage et de maintien d'une première pièce entraînée avec une seconde pièce d'entraînement rotative, caractérisé en ce que le dispositif comprend un élément de blocage en translation de la première pièce contre la seconde pièce d'entraînement selon l'axe de rotation de la seconde pièce, l'élément de blocage étant assemblé à la seconde pièce d'entraînement par au moins un élément de retenue élastique par rapport à un écartement de la première pièce avec la seconde pièce, cet élément de retenue élastique étant disposé sur une longueur de l'axe de rotation. Un autre objet de l'invention porte sur un procédé de fonctionnement d'un dispositif sécurisé d'assemblage et de maintien selon l'invention pour la retenue sécurisée de la première pièce lors d'un relâchement de la fixation ou d'un désassemblage de l'élément de blocage avec la seconde pièce d'entraînement, caractérisé en ce que le procédé comprend successivement :
- une étape de perte, voire d'arrêt, de l'entraînement de la première pièce entrainée par rapport à la seconde pièce d'entraînement rotative,
- une étape de retenue de l'élément de blocage par frottement au niveau d'un élément de retenue élastique disposé entre l'élément de blocage et la seconde pièce d'entraînement freinant la désolidarisation de l'ensemble de coupe.

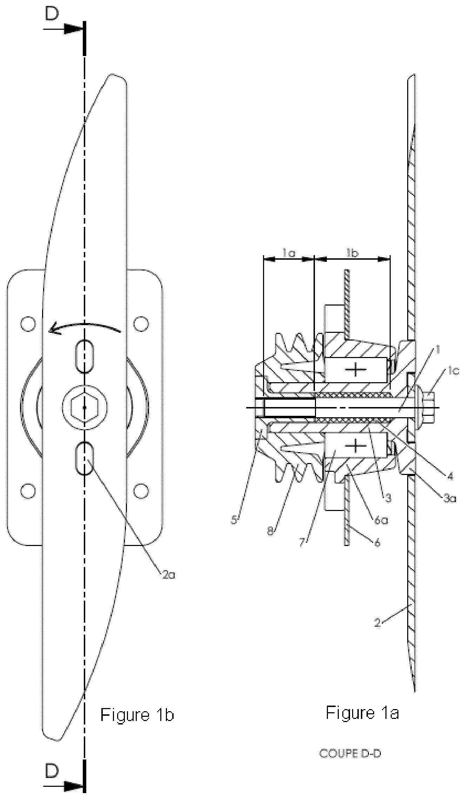

L'invention sera mieux comprise, grâce à la description ci-après, qui se rapporte à un mode de réalisation préféré, donné à titre d'exemple non limitatif, et expliqué avec référence aux dessins schématiques annexés, dans lesquels :
- la figure la se rapporte à une vue en coupe d'un dispositif sécurisé selon l'invention dans lequel les première et seconde pièces sont assemblées, la figure 1b se rapporte à une vue de coté de ce même dispositif,

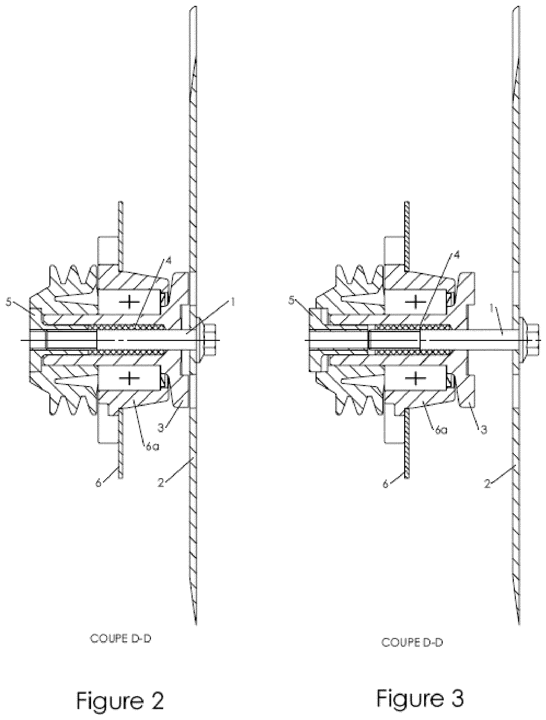

- la figure 2 se rapporte à une vue en coupe d'un dispositif sécurisé selon l'invention dans lequel les première et seconde pièces sont désassemblées,
- la figure 3 se rapporte à une vue en coupe d'un dispositif sécurisé selon l'invention dans lequel les première et seconde pièces sont désassemblées et l'élément de blocage est maintenu par le seul élément de retenue élastique.

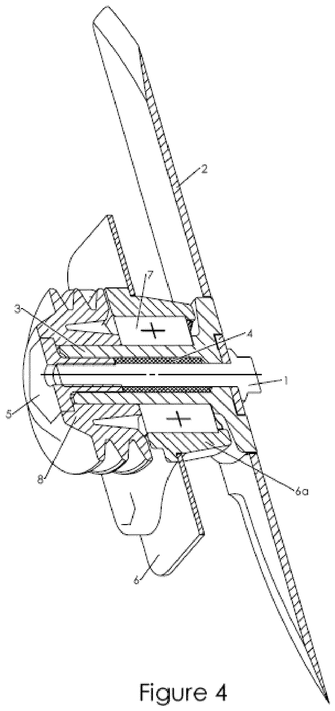

- la figure 4 est une vue en coupe et en perspective se rapportant à un dispositif sécurisé selon l'invention dans lequel les première et seconde pièces sont assemblées.

La présente invention repose sur une fixation d'une lame 2 entraînée en rotation par une pièce d'entraînement 3 grâce à l'utilisation d'un élément unique de blocage 1.

L'invention porte ainsi sur un dispositif sécurisé d'assemblage et de maintien d'une première pièce 2 entraînée avec une seconde pièce 3 d'entraînement rotative, caractérisé en ce que le dispositif comprend un élément de blocage 1 en translation de la première pièce 2 contre la seconde pièce 3 d'entraînement selon l'axe de rotation de la seconde pièce 3, l'élément de blocage 1 étant assemblé à la seconde pièce 3 d'entraînement par au moins un élément de retenue élastique 4 par rapport à un écartement de la première pièce 2 avec la seconde pièce 3. L'assemblage des différentes pièces du dispositif sécurisé de l'invention permet ainsi un accouplement de la première pièce 2 entraînée avec la seconde pièce 3 d'entraînement.

Selon une particularité de réalisation non-limitative, la seconde pièce 3 d'entraînement est montée sur un bâti 6, 6a par l'intermédiaire d'un ou de plusieurs roulements 7. Cette pièce 3 d'entraînement est ainsi rotative et fixe en translation par rapport au bâti 6, 6a. Les roulements 7 permettent d'assurer cette mobilité axiale de la pièce 3 d'entraînement. La pièce 3 d'entraînement comporte, à une première de ses extrémités, une interface permettant d'interagir avec la pièce entraînée 2, par exemple une lame, et, à la seconde de ses extrémités, un mécanisme d'actionnement de la rotation de la pièce 3 d'entraînement. Ce mécanisme d'actionnement 8 peut correspondre à une poulie, à un engrenage ou à tout autre mécanisme équivalent susceptible d'être associé à un système moteur. Ainsi, la pièce entrainée 2 et le mécanisme d'actionnement 8 sont assemblés et interagissent avec la pièce 3 d'entraînement de part et d'autre des roulements 7, ces roulements 7 participant à la fixation de la pièce d'entraînement au bâti 6, 6a.

Selon un exemple de réalisation non-limitatif représenté sur les différentes figures du présent document, l'élément de blocage 1 est monté avec la pièce 3 d'entraînement grâce à un élément de tirage 5 qui interagit avec une extrémité de l'élément de blocage 1. Cette interaction permet, d'une part, le montage de l'élément de blocage 1 avec la seconde pièce 3 d'entraînement rotative et, d'autre part, le maintien de l'assemblage de la première pièce 2 entraînée avec la seconde pièce 3 d'entraînement.

Selon un exemple de réalisation non-limitatif de l'invention, le dispositif sécurisé d'assemblage et de soutien est caractérisé en ce que l'élément de blocage 1 traverse la première pièce 2 entraînée dont il forme l'axe de rotation. Lorsque cette première pièce 2 est une lame rotative, l'élément de blocage 1 traverse l'épaisseur de la pièce 2 en son centre.

Selon le dispositif de l'invention souhaité, l'élément de blocage 1 peut être réalisé par tout élément susceptible de comprendre sur sa longueur :
- une première portion la de fixation en translation axiale de l'élément de blocage 1 par rapport à la seconde pièce d'entraînement 3,
- une seconde portion 1b d'interaction avec un élément de retenue élastique 4 coopérant avec la seconde pièce d'entraînement 3,
- une troisième portion 1c de portage et de maintien de la première pièce 2 entraînée en rotation.

Les première et troisième portions de l'élément de blocage 1 sont positionnées aux extrémités de l'élément de blocage 1.

Selon une particularité de réalisation, la première portion la de fixation interagit avec une structure 5 montée fixée en translation et en rotation par rapport à la seconde pièce 3 d'entraînement du dispositif. Selon une particularité préférentielle de réalisation, cette structure 5 est réalisée par un élément de tirage 5 tel que représenté sur les différentes figures du présent document. Cet élément de tirage 5 est positionné à l'extrémité de la seconde pièce 3 d'entraînement opposée à celle qui interagit avec la première pièce 2 entraînée. Cet élément de tirage 5 peut être réalisé par une structure montée, enchâssée à l'extrémité de la seconde pièce 3 d'entraînement ou, alternativement, faisant partie intégrante de l'extrémité de la seconde pièce 3 d'entraînement.

La seconde pièce 3 d'entraînement est ainsi prise en tenaille entre, d'une part l'élément de tirage 5 et, d'autre part, la première pièce 2 entraînée, cet élément 5 et cette pièce 2 étant réunis par l'élément de blocage 1 du dispositif. La fixation de la première portion la à cet élément de tirage 5 est réalisée de façon réversible. Cette réversibilité permet un démontage facilité et fréquent de l'élément de blocage 1 du dispositif et donc un désengagement de la pièce 2 entraînée en rotation par un manipulateur si nécessaire. Selon un exemple de réalisation non limitatif de l'invention, l'interaction de la première portion la de fixation avec l'élément de tirage est opérée par un mécanisme filetage/taraudage ou vis/écrou. Ainsi, l'assemblage et la fixation de l'élément de blocage 1 dans le dispositif peuvent être réalisés par un simple vissage associé, directement ou indirectement, à la seconde pièce 3 d'entraînement.

Selon une particularité complémentaire de réalisation, la troisième portion le de portage et de maintien de la première pièce 2 entrainée en rotation fait intervenir une lèvre, un rebord ou un anneau empêchant le déplacement par coulissement de la première pièce 2 entraînée au-delà de l'extrémité de l'élément de blocage 1 et donc empêchant la libération de la première pièce 2 par rapport à l'élément de blocage 1.

L'entraînement en rotation de la première pièce 2 par la seconde pièce 3 fait intervenir au moins un ergot 3a coopérant avec un orifice 2a dans l'épaisseur de la première pièce 2 entraînée. L'ergot 3a et l'orifice 2a sont construits pour être positionnés en regard l'un de l'autre et pour être décentrés par rapport à l'axe de rotation de la première pièce 2 entraînée et de la seconde pièce 3 d'entraînement. Ce mécanisme d'entraînement, ergot 3a et orifice 2a, permet ainsi un engagement et un désengagement facilités de la première pièce 2 entrainée avec la seconde pièce 3 d'entraînement, et donc un montage et un démontage également facilités.

Le dispositif de l'invention est ainsi sécurisé en ce que, en cas de désolidarisation inopportune de la première portion la de fixation de l'élément de blocage 1 avec l'élément de tirage 5, l'élément de blocage 1 désolidarisé est freiné dans son déplacement par l'élément de retenue 4 élastique. L'élément de blocage 1, bien que désolidarisé de la structure 5 à laquelle il devrait être fixé lorsque les première et seconde pièces sont en rotation, demeure ainsi maintenu au dispositif par l'élément de retenue 4 élastique et empêche la première pièce 2 d'être désolidarisée, voire éjectée du dispositif.

Selon une particularité préférée de réalisation de l'invention, le dispositif sécurisé de l'invention est caractérisé en ce que la longueur de l'ergot 3a est inférieure à la longueur de la première portion la de fixation de l'élément de blocage 1 par rapport à la seconde pièce 3 d'entraînement. Grâce à un tel arrangement, au cours d'une désolidarisation de l'élément de blocage 1 de l'élément de tirage 5 où la première pièce 2 se désassemble conjointement de la seconde pièce 3 d'entraînement, l'ergot 3a est délogé entièrement de son orifice 2a avant que la première portion la n'aboutisse en fin de course de désolidarisation de l'élément de tirage 5. Cet arrangement permet également, par le désassemblage anticipé de la première pièce 2 entraînée et de la seconde pièce 3 d'entraînement, de rendre folle cette première pièce 2 qui n'est plus entraînée en rotation et donc ralentit, voire stoppe, son mouvement en dépit de la rotation du dispositif. Dans l'éventualité d'une désolidarisation de l'élément de blocage 1 du reste du dispositif, l'entraînement en rotation de la première pièce 2 serait préalablement stoppé du fait du désaccouplement de la première pièce 2 avec la seconde pièce 3.

Cette construction est particulièrement efficace lorsque la première pièce 2 entraînée est montée en dessous de la seconde pièce 3 d'entraînement avec un axe de rotation disposé selon un axe verticale. En effet, le désassemblage anticipé de la première pièce 2 entraînée et de la seconde pièce 3 d'entraînement est facilité par la gravité. La première pièce 2 reste cependant maintenue au dispositif grâce, dans un premier temps, à l'élément de blocage 1 dont la première portion la de fixation est toujours insérée en partie sur une partie de sa longueur à l'élément de tirage 5 et, dans un second temps, à l'élément de retenu élastique 4 qui limite, voire empêche, la chute et le détachement de l'élément de blocage 1 du reste du dispositif. La construction du dispositif de l'invention permet également un désengagement de la première pièce 2 avec la seconde pièce 3 préalablement à la désolidarisation de l'élément de blocage 1 avec le reste du dispositif.

L'élément de retenue élastique 4 est positionné, voire maintenu serré, entre, d'une part, une partie de la seconde pièce 3 d'entraînement et, d'autre part, l'élément de blocage 1. Ce positionnement permet, par friction, de freiner, voir d'empêcher un déplacement axial de l'élément de blocage 1. Cet élément de retenue élastique 4 permet ainsi la retenue indirecte de l'assemblage de la première pièce 2 entrainée avec la seconde pièce 3 d'entraînement.

Selon une particularité de l'invention, l'élément de retenue élastique 4 est formé par une pluralité de pièces associées entre elles. Ces différentes pièces peuvent être réalisées, par exemple, par plusieurs anneaux successifs alignés axialement pour recevoir l'élément de blocage 1.

Selon une particularité de réalisation complémentaire, l'élément de retenue élastique 4 est réalisé à partir d'au moins un élastomère présentant une dureté comprise dans un intervalle défini entre 50 et 70 Shores A, préférentiellement, cette dureté est comprise entre 55 et 65 Shores A, idéalement la dureté de l'élément élastique est de l'ordre de 60 Shores A.

Un tel dispositif permet d'obtenir, d'une part, un montage simple par lequel l'élément de blocage 1 est inséré dans l'élément de retenue élastique 4 et, d'autre part, un montage sécurisé retenant la pièce 2 entraînée en mouvement et empêchant sa séparation du dispositif, même dans le cas où la pièce 2 entraînée se désengagerait de son support d'entraînement 3.

Selon un mode de réalisation préféré mais non-limitatif de l'invention, le dispositif sécurisé de l'invention est caractérisé en ce que l'élément de retenue élastique 4 est enchâssé dans la seconde pièce 3 d'entraînement, dans un espace formé axialement entre, d'une part, la paroi externe de l'élément de blocage 1 et, d'autre part, la paroi interne de la seconde pièce 3 d'entraînement.

Un arrangement particulier, non-limitatif de l'invention, est caractérisé en ce que la seconde pièce 3 d'entraînement réalise un manchon dans lequel est monté, axialement centré, l'élément de blocage 1. Cet élément de blocage 1 est ainsi monté par insertion dans ce manchon. Cette insertion est réalisée conjointement dans la seconde pièce 3 d'entraînement et dans l'élément de retenue élastique 4 disposée entre la seconde pièce 3 du dispositif et l'élément de blocage 1.

Selon un mode de réalisation préféré, mais non-limitatif de l'invention, la force de rétention opérée par l'élément de retenue élastique 4 est suffisante pour freiner ou empêcher un déplacement de l'élément de blocage 1 associé à la première pièce entraînée 2. En revanche, cette force de rétention doit être suffisamment faible pour autoriser un manipulateur à retirer l'élément de blocage 1 à la simple force des bras et/ou par utilisation d'un outil adapté.

Selon l'invention, l'élément de retenue élastique 4 est disposé sur une longueur de l'élément de blocage 1 supérieure à la moitié de la longueur totale de l'élément de blocage 1.

Ainsi, la seconde portion 1b de l'élément de blocage 1 correspond à la majorité de la longueur de l'élément de blocage 1. L'élément de retenue élastique 4 interagit ainsi sur la portion la plus longue de l'élément de blocage 1 pour ralentir, voire empêcher, un désassemblage inopportun, voir un détachement inapproprié des première 2 et seconde 3 pièces du dispositif.

Selon une particularité de réalisation, l'élément de retenue élastique 4 présente une longueur au moins égale à la longueur du diamètre de l'élément de blocage 1.

Selon une autre particularité de réalisation complémentaire, l'élément de blocage 1 présentant un diamètre supérieur à sa longueur, l'élément de retenue élastique 4 présente une longueur au moins égale à la moitié de la longueur de l'élément de blocage 1.

Selon un mode de réalisation préféré, non-limitatif de l'invention mais complémentaire, le dispositif sécurisé d'assemblage et de soutien est caractérisé en ce que l'élément de blocage 1 comporte, à une de ses extrémités, une surface d'interaction avec un outil d'accomplissement de l'assemblage de l'élément de blocage 1 à la seconde pièce d'entraînement 3. Cette surface d'interaction est préférentiellement montée à l'extrémité de la troisième portion de l'élément de blocage 1. Elle peut être réalisée, par exemple, par un ou plusieurs méplats permettant l'insertion de l'élément de blocage 1 dans l'élément de retenue élastique 4 et la seconde pièce 3 d'entraînement et/ou la fixation ou le serrage de l'extrémité de l'élément de blocage 1 avec l'élément de tirage 5.

Un exemple non-limitatif de procédé de fonctionnement du dispositif sécurisée l'invention pour la retenue sécurisée de la première pièce 2 lors d'un relâchement de la fixation ou d'un désassemblage de l'élément de blocage 1 avec la seconde pièce 3 d'entraînement est alors caractérisé en ce que le procédé comprend successivement :
- une étape de perte, voire d'arrêt, de l'entraînement de la première pièce 2 entrainée par rapport à la seconde pièce 3 d'entraînement rotative,
- une étape de retenue de l'élément de blocage 1 par frottement au niveau d'un élément de retenue élastique 4 disposé entre l'élément de blocage 1 et la seconde pièce 3 d'entraînement.

L'exemple d'application de l'invention principalement décrit dans le présent document concerne les outils de coupe où la première pièce entraînée 2 est une lame rotative à double tranchant. Ces outils de coupe sont utilisés de façon particulière dans le domaine agricole sur des machines d'écimage de la vigne, nécessitant la présence d'une pluralité d'unités de coupe telle que décrites par l'invention. Toutefois, le dispositif de l'invention peut être mis en oeuvre pour d'autres applications telles que des mécanismes d'hélices pour la fixation de pales sur un support d'entraînement.

Bien entendu, l'invention n'est pas limitée au mode de réalisation décrit et représenté aux dessins annexés. Des modifications restent possibles, notamment du point de vue de la constitution des divers éléments ou par substitution d'équivalents techniques, sans sortir pour autant du domaine de protection de l'invention.

## Revendications

1. Dispositif sécurisé d'assemblage et de maintien d'une première pièce (2) entraînée avec une seconde pièce (3) d'entraînement rotative, où le dispositif comprenant un élément de blocage (1) en translation de la première pièce (2) contre la seconde pièce (3) d'entraînement selon l'axe de rotation de la seconde pièce (3), l'élément de blocage (1) étant assemblé à la seconde pièce (3) d'entraînement par au moins un élément de retenue élastique (4) par rapport à un écartement de la première pièce (2) avec la seconde pièce (3), **caractérise en ce que** cet élément de retenue élastique (4) est disposé sur une longueur de l'axe de rotation.

2. Dispositif sécurisé d'assemblage et de maintien selon la revendication 1, **caractérisé en ce que** l'élément de retenue élastique (4) est enchâssé dans la seconde pièce (3) d'entraînement, dans un espace formé axialement entre, d'une part, la paroi externe de l'élément de blocage (1) et, d'autre part, la paroi interne de la seconde pièce (3) d'entraînement.

3. Dispositif sécurisé d'assemblage et de maintien selon une des revendications précédentes, **caractérisé en ce que** la seconde pièce (3) d'entraînement réalise un manchon dans lequel est monté, axialement centré, l'élément de blocage (1).

4. Dispositif sécurisé d'assemblage et de maintien selon une des revendications précédentes, **caractérisé en ce que** l'élément de blocage (1) traverse la première pièce (2) entraînée dont il forme l'axe de rotation.

5. Dispositif sécurisé d'assemblage et de maintien selon une des revendications précédentes, **caractérisé en ce que** l'élément de blocage (1) comprend sur sa longueur :
- une première portion (la) de fixation en translation axiale de l'élément de blocage (1) par rapport à la seconde pièce (3) d'entraînement,
- une seconde portion (1b) d'interaction avec un élément de retenue élastique (4) coopérant avec la seconde pièce (3) d'entraînement,
- une troisième portion (1c) de portage et de maintien de la première pièce (2) entraînée en rotation.

6. Dispositif sécurisé d'assemblage et de maintien selon la revendication 5, **caractérisé en ce que**, l'entraînement en rotation de la première pièce (2) par la seconde pièce (3) faisant intervenir au moins un ergot coopérant avec un orifice dans l'épaisseur de la première pièce entraînée, la longueur de l'ergot est inférieure à la longueur de la première portion (la) de fixation de l'élément de blocage (1) par rapport à la seconde pièce (3) d'entraînement.

7. Dispositif sécurisé d'assemblage et de maintien selon une des revendications précédentes, **caractérisé en ce que** l'élément de retenue élastique (4) est disposé sur une longueur de l'élément de blocage (1) supérieure à la moitié de la longueur totale de l'élément de blocage (1).

8. Dispositif sécurisé d'assemblage et de maintien selon une des revendications précédentes, **caractérisé en ce que** l'élément de retenue élastique (4) est formé par une pluralité de pièces associées entre elles.

9. Dispositif sécurisé d'assemblage et de maintien selon une des revendications précédentes, **caractérisé en ce que** l'élément de retenue élastique (4) est réalisé à partir d'au moins un élastomère présentant une dureté comprise dans un intervalle défini entre 50 et 70 Shores A.

10. Dispositif sécurisé d'assemblage et de maintien selon une des revendications précédentes, **caractérisé en ce que** l'élément de blocage (1) comporte, à une de ses extrémités, une surface d'interaction avec un outil d'accomplissement de l'assemblage de l'élément de blocage (1) à la seconde pièce (3) d'entraînement.

11. Dispositif sécurisé d'assemblage et de maintien selon une des revendications précédentes, **caractérisé en ce que** l'élément de blocage (1) est monté fixé avec la seconde pièce (3) d'entraînement par l'intermédiaire d'un vissage.

12. Dispositif sécurisé d'assemblage et de maintien selon une des revendications 1 à 11, **caractérisé en ce que** l'élément de retenue élastique (4) présente une longueur au moins égale à la longueur du diamètre de l'élément de blocage (1).

13. Dispositif sécurisé d'assemblage et de maintien selon une des revendications 1 à 11, **caractérisé en ce que**, l'élément de blocage (1) présentant un diamètre supérieur à sa longueur, l'élément de retenue élastique (4) présente une longueur au moins égale à la moitié de la longueur de l'élément de blocage (1).

14. Dispositif sécurisé d'assemblage et de maintien selon une des revendications précédentes, **caractérisé en ce que** la première pièce (2) entraînée est montée en dessous de la seconde pièce (3) d'entraînement.

15. Procédé de fonctionnement d'un dispositif sécurisé d'assemblage et de maintien selon au moins une des revendications 1 à 14 pour la retenue sécurisée de la première pièce (2) lors d'un relâchement de la fixation ou d'un désassemblage de l'élément de blocage (1) avec la seconde pièce (3) d'entraînement, **caractérisé en ce que** le procédé comprend successivement :
- une étape de perte, voire d'arrêt, de l'entraînement de la première pièce (2) entraînée par rapport à la seconde pièce (3) d'entraînement rotative,
- une étape de retenue de l'élément de blocage (1) par frottement au niveau d'un élément de retenue élastique (4) disposé entre l'élément de blocage (1) et la seconde pièce (3) d'entraînement freinant la désolidarisation de l'ensemble de coupe.

## Patentansprüche

1. Gesicherte Vorrichtung zum Zusammenbau und Befestigen eines ersten angetriebenen Teils (2) mit einem zweiten Drehantriebsteil (3),
wobei die Vorrichtung ein Blockierelement (1) zum Blockieren der Translation des ersten Teils (2) gegen das zweite Antriebsteil (3) entlang der Drehachse des zweiten Teils (3) umfasst, wobei das Feststellungselement (1) mit dem zweiten Antriebsteil (3) durch mindestens ein elastisches Befestigungselement (4) in Bezug zu einer Entfernung des ersten Teils (2) zum zweiten Teil (3) zusammengebaut ist, **dadurch gekennzeichnet, dass** dieses elastische Befestigungselement (4) auf einer Länge der Drehachse angeordnet ist.

2. Gesicherte Vorrichtung zum Zusammenbau und Befestigen nach Anspruch 1,
**dadurch gekennzeichnet, dass**
das elastische Befestigungselement (4) in das zweite Antriebsteil (3) in einen Raum eingefügt ist, der axial zwischen einerseits der Außenwand des Feststellungselements (1) und andererseits der Innenwand des zweiten Antriebsteils (3) ausgebildet ist.

3. Gesicherte Vorrichtung zum Zusammenbau und Befestigen nach einem der vorhergehenden Ansprüche,
**dadurch gekennzeichnet, dass**
das zweite Antriebsteil (3) als eine Hülse ausgebildet ist, in der axial zentriert das Feststellungselement (1) montiert ist.

4. Gesicherte Vorrichtung zum Zusammenbau und Befestigen nach einem der vorhergehenden Ansprüche,
**dadurch gekennzeichnet, dass**
das Feststellungselement (1) durch das erste angetriebene Teil (2) hindurchgeht, für das es die Drehachse bildet.

5. Gesicherte Vorrichtung zum Zusammenbau und Befestigen nach einem der vorhergehenden Ansprüche,
**dadurch gekennzeichnet, dass**
das Feststellungselement (1) auf seiner Länge umfasst:
- einen ersten Abschnitt (1a) zur Befestigung des Feststellungselements (1) in axialer Translation in Bezug zu dem zweiten Antriebsteil (3),
- einen zweiten Abschnitt (1b) zur Interaktion mit dem elastischen Befestigungselement (4), der mit dem zweiten Antriebsteil (3) zusammenwirkt,
- einen dritten Abschnitt (1c) zum Tragen und Halten des in Drehung angetriebenen ersten Teils (2).

6. Gesicherte Vorrichtung zum Zusammenbau und Befestigen nach Anspruch 5,
**dadurch gekennzeichnet, dass**
der Drehantrieb des ersten Teils (2) durch das zweite Teil (3) mindestens einen Vorsprung einsetzt, der mit einer Öffnung in der Wandstärke des ersten angetriebenen Teils zusammenwirkt, wobei die Länge des Vorsprungs kleiner als die Länge des ersten Abschnitts (1a) zur Befestigung des Feststellungselements (1) in Bezug zum zweiten Antriebsteil (3) ist.

7. Gesicherte Vorrichtung zum Zusammenbau und Befestigen nach einem der vorhergehenden Ansprüche,
**dadurch gekennzeichnet, dass**
das elastische Befestigungselement (4) auf einer größeren Länge des Feststellungselements (1) angeordnet ist, die größer als die Hälfte der Gesamtlänge des Feststellungselements (1).

8. Gesicherte Vorrichtung zum Zusammenbau und Befestigen nach einem der vorhergehenden Ansprüche,
**dadurch gekennzeichnet, dass**
das elastische Befestigungselement (4) von einer Vielzahl von miteinander verbundenen Teilen gebildet ist.

9. Gesicherte Vorrichtung zum Zusammenbau und Befestigen nach einem der vorhergehenden Ansprüche,
**dadurch gekennzeichnet, dass**
das elastische Befestigungselement (4) aus mindestens einem Elastomer hergestellt ist, das eine Härte aufweist, die in einem definierten Bereich zwischen 50 und 70 Shore A liegt.

10. Gesicherte Vorrichtung zum Zusammenbau und Befestigen nach einem der vorhergehenden Ansprüche,
**dadurch gekennzeichnet, dass**
das Feststellungselement (1) an einem seiner Enden eine Interaktionsfläche mit einem Werkzeug zum Abschluss des Zusammenbaus des Feststellungselements (1) und des zweiten Antriebsteils (3) umfasst.

11. Gesicherte Vorrichtung zum Zusammenbau und Befestigen nach einem der vorhergehenden Ansprüche,
**dadurch gekennzeichnet, dass**
das Feststellungselement (1) montiert ist, wobei das zweite Antriebsteil (3) mit Hilfe von Schrauben befestigt ist.

12. Gesicherte Vorrichtung zum Zusammenbau und Befestigen nach einem der Ansprüche 1 bis 11,
**dadurch gekennzeichnet, dass**
das elastische Befestigungselement (4) eine Länge mindestens gleich der Länge des Durchmessers des Feststellungselements (1) aufweist.

13. Gesicherte Vorrichtung zum Zusammenbau und Befestigen nach einem der Ansprüche 1 bis 11,
**dadurch gekennzeichnet, dass**
das Feststellungselement (1) einen größeren Durchmesser als seine Länge aufweist, wobei das elastische Befestigungselement (4) eine Länge mindestens gleich der Hälfte der Länge des Feststellungselements (1) aufweist.

14. Gesicherte Vorrichtung zum Zusammenbau und Befestigen nach einem der vorhergehenden Ansprüche,
**dadurch gekennzeichnet, dass**
das erste angetriebene Teil (2) unter dem zweiten Antriebsteil (3) montiert ist.

15. Verfahren zum Betrieb einer gesicherten Vorrichtung zum Zusammenbau und Befestigen nach mindestens einem der Ansprüche 1 bis 14, zum sicheren Befestigen des ersten Teils (2) bei einer Lockerung der Verbindung oder einer Trennung des Feststellungselements (1) und des zweiten Antriebselements (3), **dadurch gekennzeichnet, dass** das Verfahren nacheinander umfasst:
- einen Schritt des Verlusts bzw. Einstellens des Antriebs des ersten angetriebenen Teils (2) in Bezug zum zweiten Drehantriebsteil (3),
- einen Schritt des Befestigens des Feststellungselements (1) durch Reibung im Bereich eines elastischen Befestigungselements (4), das zwischen dem Feststellungselement (1) und dem zweiten Antriebsteil (3) angeordnet ist, wobei die Trennung der Schneideinheit gehemmt wird.

## Claims

1. A secure device for assembling and holding a first, driven part (2) with a second, rotatory drive part (3), in which the device including a blocking element (1) blocking translation of the first part (2) against the second drive part (3) along the rotation axis of the second part (3), the blocking element (1) being assembled to the second drive part (3) by at least one elastic retaining element (4) with respect to a spacing of the first part (2) with the second part (3), **characterized in that** this elastic retaining element (4) is disposed over a length of the rotation axis.

2. The secure device for assembling and holding according to Claim 1, **characterized in that** the elastic retaining element (4) is inserted in the second drive part (3) in a space formed axially between, on the one hand, the external wall of the blocking element (1) and, on the other hand, the internal wall of the second drive part (3).

3. The secure device for assembling and holding according to one of the preceding claims, **characterized in that** the second drive part (3) defines a sleeve in which the blocking element (1) is mounted in an axially centred manner.

4. The secure device for assembling and holding according to one of the preceding claims, **characterized in that** the blocking element (1) traverses the first driven part (2), of which it forms the rotation axis.

5. The secure device for assembling and holding according to one of the preceding claims, **characterized in that** the blocking element (1) includes over its length:
- a first portion (1a) for the fixing in axial translation of the blocking element (1) with respect to the second drive part (3),
- a second portion (1b) for interaction with an elastic retaining element (4) cooperating with the second drive part (3),
- a third portion (1c) for carrying and holding the first driven part (2) in rotation.

6. The secure device for assembling and holding according to Claim 5, **characterized in that**, the driving in rotation of the first part (2) by the second part (3) involving at least one pin cooperating with an orifice in the thickness of the first, driven part, the length of the pin is less than the length of the first portion (1a) for fixing the blocking element (1) with respect to the second, drive part (3).

7. The secure device for assembling and holding according to one of the preceding claims, **characterized in that** the elastic retaining element (4) is disposed over a length of the blocking element (1) greater than half the total length of the blocking element (1).

8. The secure device for assembling and holding according to one of the preceding claims, **characterized in that** the elastic retaining element (4) is formed by a plurality of parts which are associated with one another.

9. The secure device for assembling and holding according to one of the preceding claims, **characterized in that** the elastic retaining element (4) is made from at least one elastomer having a hardness comprised in a defined interval between 50 and 70 Shore A.

10. The secure device for assembling and holding according to one of the preceding claims, **characterized in that** the blocking element (1) comprises, at one of its ends, a surface for interaction with a tool for implementing the assembling of the blocking element (1) to the second, drive part (3).

11. The secure device for assembling and holding according to one of the preceding claims, **characterized in that** the blocking element (1) is mounted in a fixed manner with the second drive part (3) by means of screwing.

12. The secure device for assembling and holding according to one of Claims 1 to 11, **characterized in that** the elastic retaining element (4) has a length at least equal to the length of the diameter of the blocking element (1).

13. The secure device for assembling and holding according to one of Claims 1 to 11, **characterized in that**, the blocking element (1) having a diameter greater than its length, the elastic retaining element (4) has a length at least equal to half the length of the blocking element (1).

14. The secure device for assembling and holding according to one of the preceding claims, **characterized in that** the first, driven part (2) is mounted beneath the second, drive part (3).

15. An operating method of a secure device for assembling and holding according to at least one of Claims 1 to 14 for the secure retaining of the first part (2) on loosening of the fixing or disassembly of the blocking element (1) with the second, drive part (3), **characterized in that** the method includes successively:
- a step of loss, even stopping, of the driving of the first, driven part (2) with respect to the second, rotary drive part (3),
- a step of retaining the blocking element (1) by friction at the level of an elastic retaining element (4) disposed between the blocking element and the second, drive part (3) braking the decoupling of the cutting assembly.
